# EUROPEAN PATENT SPECIFICATION

(11) **EP 1 727 712 B1**
(45) Date of publication and mention of the grant of the patent: **05.03.2008**
(21) Application number: 05728098.4
(22) Date of filing: 22.03.2005
(51) Int. Cl.: B60R 21/16, B60R 21/231

(54) **AN AIR-BAG ARRANGEMENT**
AIRBAG-ANORDNUNG
SYSTEME D'AIRBAG

(30) Priority: 24.03.2004 GB 0406628
(43) Date of publication of application: 06.12.2006
(73) Proprietor: Autoliv Development AB, 44783 Vargarda (SE)
(72) Inventor: MATURA, Hervé, FR-38080 L'isle d'abeau (FR); BAILLIVET, Rémi, F-76220 Dampierre-en-Bray (FR); MAURIN, Stéphane, F-76220 Beauvoir en Lyons (FR); PUCCETTI, Yves, Congleton, Cheshire CW12 2JJ (GB)
(74) Representative: Parry, Simon James
(86) International application number: PCT/SE2005/000408
(87) International publication number: WO 2005/090130

(56) References cited:
- EP-A2- 1 364 838
- DE-A1- 19 521 071
- JP-A- 11 312 506
- US-A- 5 906 391

## Description

THE PRESENT INVENTION relates to an air-bag arrangement, and more particularly relates to an air-bag arrangement in a motor vehicle.

It is known to provide an inflatable air-bag in a motor vehicle to protect an occupant, such as a front seat occupant, of the vehicle in the event that an accident should occur. Typical air-bag arrangements of this type include an air-bag provided in the steering wheel or dash board of the motor vehicle, the air-bag being configured to inflate in an accident situation so as to adopt a position generally in front of a front seat occupant of the motor vehicle, in order to provide protection to the occupant in the event of an accident.

However, it has been found that some vehicle occupants, particularly drivers of lower than average height, tend to sit "out-of-position" relative to an average person, meaning that the occupant is located closer than normal to the air-bag. This can have serious implications in the event of an accident because the inflating air-bag can cause serious injuries to an occupant sitting too close to the air-bag.

It is therefore known to provide sensor arrangements in order to sense the position of an occupant of a seat of a motor vehicle, and one specific example incorporates a sensor to provide an output signal which can modify the deployment of an air bag depending upon the position of the occupant, in order to avoid serious injury to the occupant upon inflation of the air-bag. However, such sensor arrangements can be complicated, and incorporate significant electronic circuitry. It is therefore desirable to provide a more simple solution to the above mentioned problem.

JP1131250 A discloses an internal air-bag according to the preamble of claim 1, attached so that only gas injected from a second inflated chamber is supplied, and an external bag is attached so that gas injected from a first and the second inflator chamber can be supplied. A bent piece of each bag body in the external bag and bent pieces of each bag body in the internal bag is sewn by a tear seam so as to integrate both the bags. The external bag expands small in a low output operation time and expands large in a high output operation time when the tear seam is cut off by the expanding force of the internal bag.

DE19521071 discloses an air-bag which is structured by superposing a lower panel and an upper panel and sewing up the edges of the panels. The air-bag is provided with an opening for an inflator at its rear portion. Flaps are extended from a peripheral portion of the opening for the inflator. Mounting holes are provided for rivets or bolts. The upper and lower panels can be formed by folding a single piece of cloth.

US5906391 discloses a dual chamber air-bag and a method for making a dual chamber side impact air-bag with an integral vented panel. A partial vent panel is formed from a section in each air-bag piece such that the two partial panels meet as the air-bag pieces are assembled to make the air-bag. The two panels are subsequently sewn together, thereby forming an integral vented panel separating an upper and a lower chamber within the air-bag. It is an object of the invention to provide an improved airbag.

According to the present invention, there is provided an air-bag arrangement in a motor vehicle, the air-bag arrangement incorporating an air-bag and an inflator configured to inflate the air-bag; the air-bag comprising at least left and right layers of fabric interconnected by a tear seam, and being configured so that, upon inflation of the air-bag, at least part of said seam adopts a vertically-oriented position substantially facing an occupant of the vehicle, wherein the air-bag is configured such that said tear seam is positioned, upon inflation of the air-bag, to be at least partially contacted by a said occupant in an accident situation, and wherein the tear seam is configured to rupture at least partially when the internal pressure within the air-bag reaches a predetermined level only in regions which are not contacted by a said occupant in an accident situation.

Advantageously, a vent hole is provided in the air-bag.

Preferably, said vent hole is provided in said tear seam, at a point at which the tear seam faces away from the occupant.

Conveniently, the air-bag has the configuration of a front air-bag; the air-bag being configured, upon inflation, to occupy a position generally in front of said occupant, when the occupant is sitting in a front seat of the motor vehicle.

Alternatively, the air-bag has the configuration of a side air-bag, the air-bag being configured, upon inflation, to occupy a position generally to one side of said occupant, when the occupant is sitting in the seat of the motor vehicle.

Advantageously, the seam is a "free" seam, meaning that it is not connected in any way to any form of internal strap or retainer.

So that the invention may be more readily understood, and so that further features thereof may be appreciated, embodiments of the invention will now be described, by way of example, with reference to the accompanying drawings, in which:
FIGURE 1 is a schematic, vertical cross-section through an air-bag in accordance with the present invention, showing the air-bag in a deployed, almost fully-inflated position;
FIGURE 2 is a transverse cross-sectional view of the air-bag illustrated in Figure 1 taken along line II-II;
FIGURE 3 is a transverse cross-sectional view corresponding generally to that of Figure 2, but illustrating the air-bag in a state of substantially full inflation;
FIGURE 4 is a schematic view from above, illustrating the air-bag in a deployed position, relative to an occupant of a motor vehicle; and
FIGURE 5 is a vertical cross-sectional view, corresponding generally to that of Figure 1, but illustrating a modified embodiment of the invention.

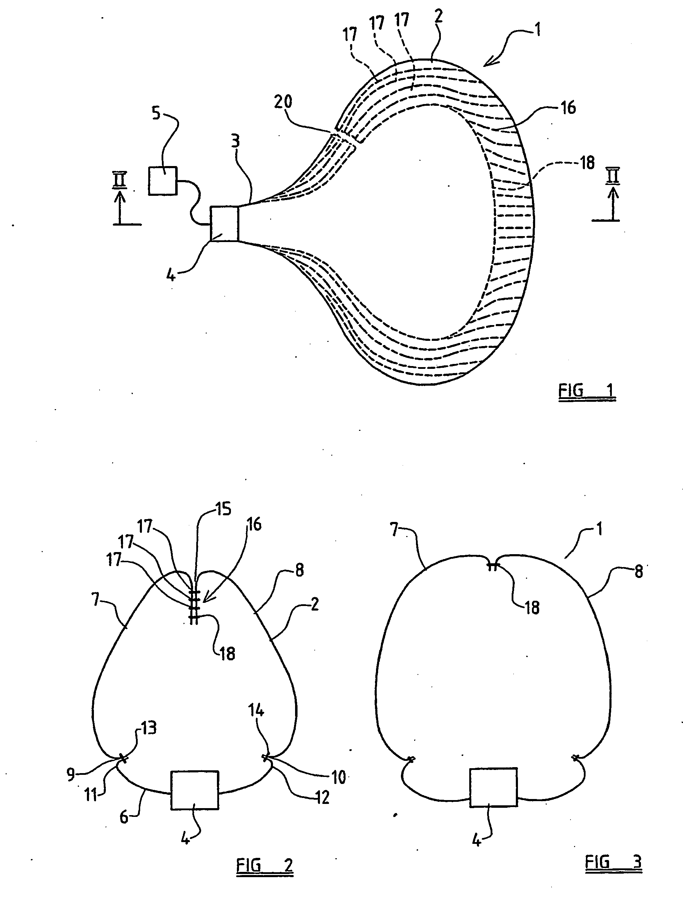

Referring initially to Figure 1, there is illustrated, in vertical cross-sectional view, an air-bag 1 having an inflatable envelope 2 which defines a gas inlet opening 3. The gas inlet opening 3 is connected to an inflator in the form of a gas generator 4. The gas generator 4 is configured to inflate the envelope 2 of the air-bag 1 in response to an appropriate signal from a crash sensor 5 mounted at an appropriate position within the motor vehicle.

It is to be understood that the air-bag of Figure 1 has the configuration of a front air-bag, in other words the air-bag is intended to provide protection to a front seat occupant of a motor vehicle, in the event of a frontal crash, the air bag being configured so that, upon inflation of the air-bag, the air-bag occupies a position generally in front of an occupant of the vehicle who is seating in the front seat of the vehicle.

The air-bag envelope 2 is manufactured from fabric material and, as illustrated in Figure 3, comprises three sheets or layers 6, 7, 8 of fabric material.

As can be seen from Figure 2, the layer 6 defines a rear or base portion of the air-bag envelope 2, whereas the other two layers 7, 8 define left and right main portions of the air-bag envelope respectively.

The left and right layers 7, 8 are connected to one another along respective edges 9, 10 to an edge 11, 12 of the base layer 6 by way of lines of stitching indicated schematically at 13, 14.

From the lines of stitching 13, 14, the left and right layers 7, 8 of the air-bag envelope extend generally forwardly from the gas generator 4 and are then turned inwardly so as to define a forwardly-positioned re-entrant region 15. In the re-entrant region 15, the left and right layers 7, 8 of fabric are interconnected by a seam (indicated generally at 16), the seam comprising a plurality of breakable lines of stitching 17, and a final stronger line of stitching 18. As will become clear from the following description, the lines of breakable stitching 17 serve to allow at least a region of the seam 16 to rupture during inflation of the air-bag, making the seam 16 a tear-seam.

As will be seen from Figure 2, the various lines of stitching 13, 14, 17, 18, are all formed inside the envelope 2 of the air-bag, and so are located within the internal volume of the air-bag. In a manner known *per se*, envelope 2 of the air-bag will typically be stitched together from its constituent layers 6, 7, 8 of fabric and then turned "inside-out" so that the seams become located inside the envelope of the air-bag 2. It should also be appreciated that, in order to ease manufacture of the air-bag envelope, the constituent layers 6, 7, 8 of fabric, could be co-woven using a known one-piece-weaving technique in which the warp and weft yarns of one piece of fabric are interwoven with those of another piece of fabric as the two pieces of fabric are themselves woven.

Figure 2 illustrates the tear seam 16 in vertical cross-section from which it will be seen that the tear seam 16 extends inwardly of the envelope 2 around a vertically-orientated "equator" of the air-bag 1. The inner extent of the tear seam 16 is defined by the final stronger line of stitching 18.

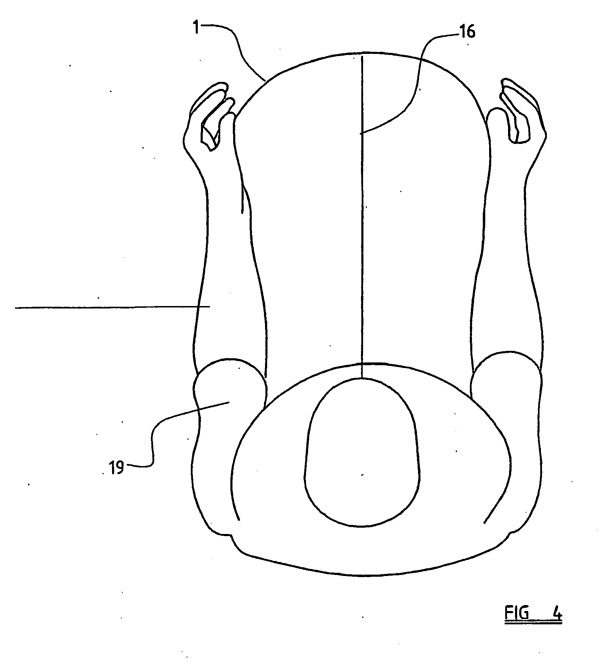

Because of the generally central location of the tear seam 16, running along the vertical equator of the air-bag, it will be seen particularly from Figure 4 that when the air-bag 1 is inflated in front of an occupant 19 of a motor vehicle, then the tear seam 16 will be located so as to face the occupant 19.

As illustrated in Figure 1, a preferred embodiment is provided with a vent hole 20 which is defined by a gap in the tear seam 16, at a position directed away from the occupant 19, in order that the gas venting through the hole 20 does not injure the occupant 19.

Turning now to consider briefly Figure 3, the air-bag 1 is illustrated in a substantially fully inflated condition, such as might be the case if the air-bag were not to encounter any obstruction during inflation or were not to be impacted by an occupant of the motor vehicle. It will be seen that in such unrestricted conditions, the air-bag 1 has inflated so that the breakable lines of stitching 17 have all broken, thereby allowing the tear seam 16 to rupture to a point at which the left and right layers of fabric 8, 9 draw tightly against the final, stronger line of stitching 18. In this fully inflated condition, the air-bag no longer defines a forwardly-directed re-entrant region 15.

It should be appreciated that, as the breakable lines of stitching 17 break allowing the tear seam 16 to rupture, the air-bag envelope is allowed to move further forwardly, relative to the gas generator 4, when compared to the condition illustrated in Figure 2, in which the tear seam 16 remains intact.

As will be clear from Figure 4, when the air-bag 1 is mounted within a motor vehicle such that the tear seam 16 substantially faces an occupant 19 when the air-bag 1 is inflated, then in an accident situation, the occupant's torso will move towards the air-bag 1 and will impact with the air-bag 1 such that parts of the occupant actually contact a region of the tear seam 16. It has been found that as the internal gas pressure within the air-bag increases whilst the occupant contacts regions of the tear seam, then those regions of the tear seam which are in contact with the occupant do not rupture as explained above. It has been found that in an accident situation in which an occupant contacts regions of the tear seam, it is only the regions of the tear seam which are not in contact with the occupant which rupture as described above.

The result of the above-described effect, is that the inflation characteristics of the air-bag 1 depend upon the degree of contact between the occupant 19 and the tear seam 16. In the regions of the tear seam 16 which do not contact the occupant, then the tear seam is allowed to rupture meaning that in those regions, the air-bag envelope 2 is allowed to continue moving away from the gas generator 4 during inflation of the air-bag, whereas those regions of the air-bag where the seam 16 is contacted by the occupant are stopped from moving further away from the gas generator 4. This means that the inflating air-bag 1 is prevented from moving against the torso of the occupant in the areas where the tear seam 16 is in contact with the occupant, thereby avoiding, or at least reducing, the risk of injury to the occupant.

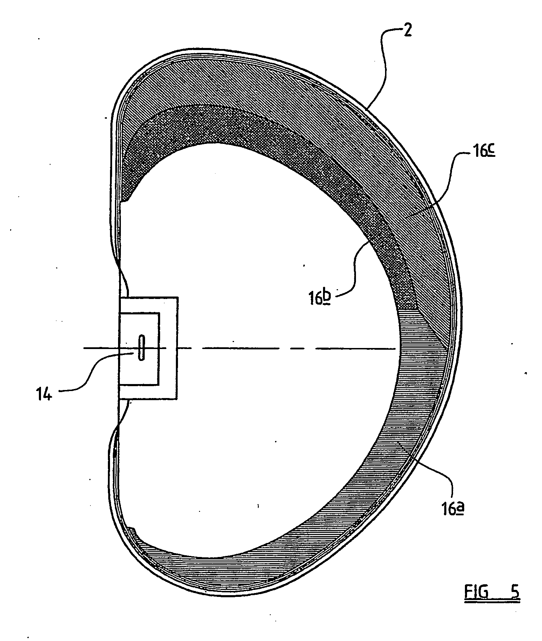

Figure 5 illustrates a modified embodiment of the present invention, with a view corresponding generally to that of Figure 1. In this arrangement, the seam 16 is provided with three distinct regions 16a, 16b, 16c. Region 16a extends along substantially the entire lower extent of the seam 16, or in other words below the mid-point of the air-bag envelope 2. This region 16a of the seam is configured, by virtue of the relative strength of the lines of breakable stitching 17 so as to behave as explained above in the event of an accident situation, when the seam 16 is contacted by the torso of the seat occupant. In other words, the lower region 16a of the seam is configured so as to rupture only in areas where the occupant 19 does not contact the seam region 16a.

The upper region of the seam 16 is defined by two seam regions, namely an inner region 16b and an outer region 16c.

The outer region 16c is configured to rupture as the air-bag begins to absorb energy through impact with the occupant. It should be appreciated that in an accident situation, the occupant's lower body is likely to contact the air-bag before the occupant's upper body, thereby giving time for the outer seam region 16c to rupture before the occupant contacts the upper region of the bag. In this way, the outer seam region 16c serves an internal venting function, by absorbing energy as the seat occupant impacts with the upper region of the air bag, thereby allowing an increase in the upper volume of the air-bag, which, in turn, allows a reduction in internal pressure in order to avoid a situation in which the air-bag is inflated to such a degree that the seat occupant will bounce back violently from the air-bag rather than being cushioned by the air bag.

The inner, upper region 16b of the seam can be configured either to remain substantially intact during an accident situation, or to rupture to a degree in order to provide a second phase of internal venting in a similar manner to the outer region 16c.

It is to be understood that the above-described embodiment is a front air-bag configured, upon inflation, to be located in front of an occupant of a vehicle. However, it is to be understood that the invention may be applied to a side air-bag, that is to say an air-bag which is so configured that, upon inflation, the air-bag occupies a position generally to one side of an occupant of a vehicle, when the occupant is seating on a seat in the vehicle.

In the above described embodiments of the invention the seam constituted by the stitching 13, 14 which interconnects the two layers of fabric 7, 8 is a "free" seam, in that the seam is not connected in any way to any form if internal strap of retainer. Thus, on inflation of the air-bag, the seam will not be held back by any internal retainer, and may moved to a position in which the seam is in contact with the seat occupant relatively swiftly.

When used in this specification and claims, the terms "comprises" and "comprising" and variations thereof mean that the specified features, steps or integers are included. The terms are not to be interpreted to exclude the presence of other features, steps or components.

## Claims

1. An air-bag arrangement in a motor vehicle, the air-bag arrangement incorporating an air-bag (1) and an inflator (4) configured to inflate the air-bag (1), the air-bag (1) comprising at least left and right layers of fabric (7,8) interconnected by a tear seam (16), and, **characterized in that** it is configured so that, upon inflation of the air-bag (1), at least part of said seam (16) adopts a vertically-oriented position substantially facing an occupant of the vehicle, wherein the air-bag (1) is configured such that said tear seam (16) is positioned, upon inflation of the air-bag (1), to be at least partially contacted by a said occupant in an accident situation, and wherein the tear seam (16) is configured to rupture at least partially when the internal pressure within the air-bag (1) reaches a predetermined level only in regions which are not contacted by a said occupant in an accident situation.

2. An air-bag arrangement according to claim 1, wherein a vent hole (16c) is provided in the air-bag (1).

3. An air-bag arrangement according to claim 2, wherein said vent hole (16c) is provided in said tear seam (16), at a point at which the tear seam (16) faces away from the occupant.

4. An air-bag arrangement according to any preceding claim, wherein the air-bag (1) has the configuration of a frontair-bag, the air-bag (1) being configured, upon inflation, to occupy a position generally in front of said occupant, when the occupant is sitting in the seat of the motor vehicle.

5. An air-bag arrangement according to any one of claims 1 to 4, wherein the air-bag (1) has the configuration of a side air-bag, the air-bag being configured, upon inflation, to occupy a position generally to are side of said occupant, when the occupant is sitting in the seat of a rotor vehicle.

6. An air-bag arrangement according to any preceding claim, wherein the seam is a "free" seam, meaning that it is not connected in any way to any form of internal strap or retainer.

## Patentansprüche

1. Airbaganordnung in einem Kraftfahrzeug mit einem Airbag (1) und einer zum Aufblasen des Airbags (1) eingerichteten Aufblaseinrichtung (4), wobei der Airbag (1) wenigstens durch eine Reißnaht (16) miteinander verbundene linke und rechte Lagen eines Gewebes (7, 8) aufweist, **dadurch gekennzeichnet, dass** der Airbag (1) derart ausgebildet ist, dass nach dem Aufblasen des Airbags (1) wenigstens ein Teil der Naht (16) eine vertikal ausgerichtete und im wesentlichen einem Insassen des Fahrzeuges zugewandte Stellung einnimmt, wobei der Airbag (1) so ausgebildet ist, dass die Reißnaht (16) nach dem Aufblasen des Airbags (1) so positioniert ist, dass sie wenigstens teilweise in einer Unfallsituation mit dem Insassen in Kontakt kommt, und wobei die Reißnaht (16) dazu eingerichtet ist, wenigstens teilweise nur in Bereichen, die von dem Insassen in einer Unfallsituation nicht kontaktiert werden, zu reißen, wenn der Innendruck innerhalb des Airbags (1) eine vorbestimmte Größe erreicht.

2. Airbaganordnung nach Anspruch 1, bei welcher in dem Airbag (1) eine Entlüftungsöffnung (16c) angeordnet ist.

3. Airbaganordnung nach Anspruch 2, bei welcher die Entluftungsöffnung (16c) in der Reißnaht (16) an einer Stelle angeordnet ist, an der die Reißnabt (16) dem Insassen abgewandt ist.

4. Airbaganordnung nach einem der vorhergehenden Ansprüche, bei welcher der Airbag (I) die Ausbildung eines Frontairbags aufweist, wobei der Airbag (1) so ausgebildet ist, dass der Airbag nach dem Aufblasen eine Position generell vor dem Insassen einnimmt, wenn der Insasse in dem Sitz des Fahrzeuges sitzt.

5. Airbaganordnung nach einem der Ansprüche 1 bis 4, bei welcher der Airbag (1) die Ausbildung eines Seitenairbags aufweist, wobei der Airbag so ausgebildet ist, dass der Airbag nach dem Aufblasen eine Position generell auf einer Seite des Insassens einnimmt, wenn der Insasse in dem Sitz des Fahrzeuges sitzt.

6. Airbaganordnung nach einem der vorhergehenden Ansprüche, bei welcher die Naht eine "freie Naht" in dem Sinne ist, dass die Naht nicht in irgendeiner Weise mit irgendeiner Art eines internen Bandes oder Haltemittels verbunden ist.

## Revendications

1. Système d'airbag dans un véhicule automobile, le système d'airbag comportant un airbag (1) et un gonfleur (4) configuré pour gonfler l'airbag (1), l'airbag (1) comprenant au moins des couches de tissu gauche et droite (7, 8) reliées par une couture déchirable (16) et **caractérisé en ce qu'**il est configuré de sorte que lorsque l'airbag (1) est gonflé, au moins une partie de ladite couture (16) adopte une position orientée verticalement faisant essentiellement face à un occupant du véhicule, dans lequel l'airbag (1) est configuré de sorte que ladite couture déchirable (16) est positionnée, lorsque l'airbag (1) est gonflé, pour être touchée au moins en partie par un dit occupant dans une situation d'accident, et dans lequel la couture déchirable (16) est configurée pour se rompre au moins partiellement, lorsque la pression intérieure dans l'air-bag (1) atteint un niveau prédéterminé, seulement dans des régions qui ne sont pas touchées par un dit occupant dans une situation d'accident

2. Système d'airbag selon la revendication 1, dans lequel un trou d'aération (16c) est disposé dans l'airbag (1).

3. système d'airbag selon la revendication 2, dans lequel ledit trou d'aération (16c) est disposé dans ladite couture déchirable (16) à un endroit où la couture déchirable (16) est tournée dans le sens opposé à l'occupant.

4. Système d'airbag selon l'une quelconque des revendications précédentes, dans lequel l'airbag (1) a la configuration d'un airbag avant, l'airbag (1) étant configuré, lorsqu'il est gonflé, pour occuper une position généralement en face dudit occupant, lorsque l'occupant est assis dans le siège du véhicule automobile.

5. Système d'airbag selon l'une quelconque des revendications 1 à 4, dans lequel l'airbag (1) a la configuration d'un airbag latéral, l'airbag étant configuré, lorsqu'il est gonflé, pour occuper une portion généralement d'un côté dudit occupant, lorsque l'occupant est assis dans le siège du véhicule automobile.

6. Système d'airbag selon l'une quelconque des revendications précédentes, dans lequel la couture est une couture "libre", autrement dit, elle n'est reliée d'aucune manière à aucune forme de bande ou d'élément de retenue intérieur.
